# NEUE EUROPÄISCHE PATENTSCHRIFT

(11) **EP 0 670 149 B2**
(45) Veröffentlichungstag und Bekanntmachung des Hinweises auf die Entscheidung über den Einspruch: **22.01.2003**
(45) Hinweis auf die Patenterteilung: 20.01.1999
(21) Anmeldenummer: 95102433.0
(22) Anmeldetag: 21.02.1995
(51) Int. Cl.: A61C 1/08, A61C 1/06, A61B 17/16

(54) **Gerades Motorhandstück, insbesondere für medizinische Zwecke, vorzugsweise für ein medizinisches oder dentales Labor**
Straight motor-driven hand piece, in particular for medical applications, preferably for a medical or dental laboratory
Pièce à main droite motorisée, en particulier pour des fins médicales, de préférence pour un laboratoire médical ou dentaire

(30) Priorität: 02.03.1994 DE 4406855
(43) Veröffentlichungstag der Anmeldung: 06.09.1995
(73) Patentinhaber: KALTENBACH & VOIGT GMBH & CO., 88400 Biberach (DE)
(72) Erfinder: Düsing, Josef, D-88299 Leutkirch (DE)
(74) Vertreter: Schmidt-Evers, Jürgen, Dipl.-Ing.

(56) Entgegenhaltungen:
- EP-A- 0 581 037
- DE-A- 2 132 891
- GB-A- 2 118 837

## Beschreibung

Die Erfindung bezieht sich auf ein gerades Motor-handstück nach dem Oberbegriff des Anspruchs 1.

Ein Handstück der vorliegenden Art eignet sich insbesondere für solche mechanischen Bearbeitungen von natürlichen oder künstlichen Teilen des menschlichen oder tierischen Körpers, bei denen eine verhältnismäßig große Antriebs- und Arbeitsleistung gefordert ist. Für den ärztlichen Bereich eignet sich ein solches Handstück deshalb insbesondere für die Bearbeitung verhältnismäßig fester Körperteile. Im dentalen Bereich läßt sich ein solches Handstück dann im Mundraum eines Patienten zur Zahnbehandlung einsetzen, wenn es von einer entsprechend kleinen Bauweise ist.

Ein vorliegendes Handstück eignet sich vorzugsweise für ein medizinisches, insbesondere dentales Labor, in dem insbesondere künstliche Körperteile oder Modelle spanabhebend mittels in das Handstück einspannbarer Werkzeuge drehender Funktion bearbeitet werden. Das Handstück eignet sich zur Übertragung einer verhältnismäßig großen Arbeitsleistung auf das Werkzeug und es lassen sich unterschiedliche Werkzeuge handhabungsfreundlich und schnell spannen bzw. lösen und austauschen.

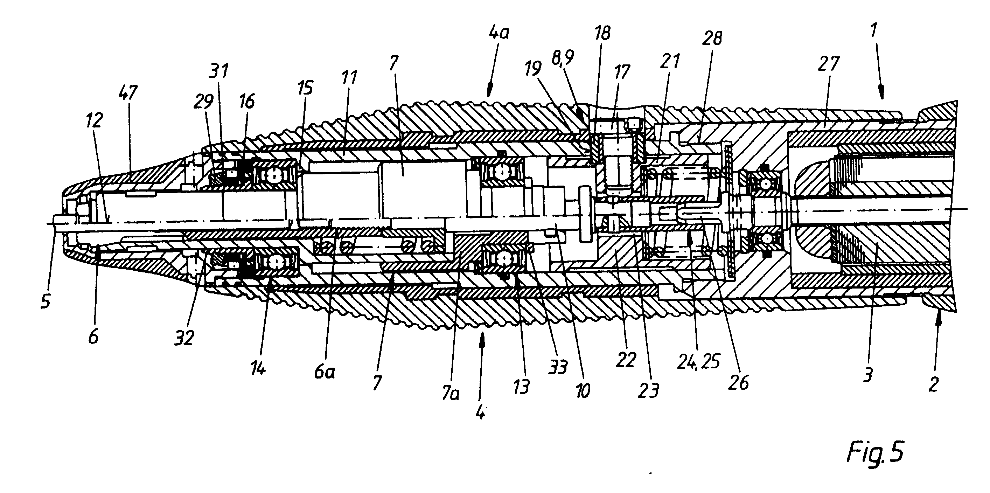

Ein Handstuck der eingangs beschriebenen Art wird von der Anmelderin unter der Bezeichnung K9-Handstück Type 950 auf dem Markt vertrieben und ist somit bekannt. Im folgenden wird dieses Handstück anhand einer beigefügten Fig. 5 beschrieben.

Das stabförmige, gerade Handstück 1 besteht aus einem hinteren, nur teilweise dargestellten Motorteil 2 mit einem darin eingebauten, insbesondere elektrischen Antriebsmotor 3 und einem vorderen Handstückteil 4, in das von vorne ein Bearbeitungswerkzeug mit seinem Schaft 5 einspannbar ist. Hierzu dient eine koaxial im Handstückteil 4 angeordnete, hülsenförmige, geschlitzte Spannzange 6, die Teil einer Antriebswelle 7 ist, die koaxial im Handstückteil 4 drehbar gelagert ist und mit dem Antriebsmotor 3 zu ihrer Rotation verbunden ist. Die Spannzange 6 läßt sich durch eine Relativverdrehung zwischen dem Motorteil 2 und einer Griffhülse 4a des Handstückteil 4 öffnen und schließen. Hierzu ist in das Handstückteil 4 ein Betätigungsmechanismus 8 integriert, der zwischen der Griffhülse 4a und der Antriebswelle 7 wirksam ist und ein Getriebe 9 aufweist, das die Drehbewegung der Griffhülse 4a in eine Axialbewegung einer runden Anzugstange 10 umwandelt, die sich von hinten koaxial durch eine Lagerhülse 7a der Antriebswelle 7 erstreckt, darin axial beweglich in einer Bohrung gelagert ist und mit ihrem vorderen Ende in ein Innengewinde 6a der Spannzange 6 eingeschraubt ist. Die Griffhülse 4a ist auf einem hülsenförmigen Innengehäuse 11 um die Längsmittelachse 12 des Handstücks 1 drehbar und längs verschiebbar gelagert. Im Innengehäuse 11 ist die Antriebswelle 7 mittels zwei einen axialen Abstand voneinander aufweisenden Wälzlagern 13, 14 drehbar gelagert, von denen das vordere Wälzlager 14 mit seiner Hinterseite an einer Innenringschulter 15 des Innengehäuses 11 anliegt, wobei der Außenring des Wälzlagers 14 durch eine Mutter 16 gegen die Innenringschulter 15 festgeschraubt ist. Die Mutter 16 ist in ein Innengewinde am vorderen Ende des Innengehäuses 11 eingeschraubt. Vor der Mutter 16 ist außerdem eine Frontkappe 47 in das Innengewinde eingeschraubt, die die etwa hälftig vom Innengehäuse 11 hervorragende Spannzange 6 abdeckt.

Das Getriebe 9 weist eine radiale Schraube 17 auf, die ein radiales Loch in der Griffhülse 4a und mit einer Rolle 18 eine im Innengehäuse 11 in Umfangsrichtung schräg verlaufende Nut 19 durchfaßt und in ein Drückstück 21 eingeschraubt ist, das im hinteren Endbereich des hohlzylindrischen Innengehäuses 11 axial verschiebbar mit Bewegungsspiel sitzt und in einem mittleren Innenring 22 ein zentrales Loch 23 aufweist, durch das hindurch die Antriebswelle 7 mit einem Steck-Verbindungsabschnitt 24 ragt, der durch eine Steckkupplung 25 mit einem Antriebszapfen 26 des Antriebsmotors 3 verbunden ist.

Das Motorteil 2 weist ebenfalls ein Innengehäuse 27 auf, in dem der Antriebsmotor 3 angeordnet ist und mit dem es auf das hintere Ende des Innengehäuses 11 des Handstückteils 4 bei 28 aufgeschraubt ist, wobei die Griffhülse 4a das vordere Ende des Motorteils 2 nach hinten überlappt.

Bei diesem bekannten Handstück ist die Antriebswelle 7 im hinter der Innenringschulter 15 liegenden Bereichen im Querschnitt größer bemessen als der freie Innenquerschnitt der Innenringschulter 15.

Nach bestimmten Benutzungszeiten des Handstücks ist es erforderlich, die Lager 13, 14 der Antriebswelle 7 auszutauschen, da sie einem nicht vermeidbaren Verschleiß unterliegen. Hierzu ist die Antriebswelle 7 zu demontieren, was durch folgende Demontagemaßnahmen erfolgt:

Das Handstückteil 4 ist vom Motorteil 2 zu trennen, was durch Losschrauben der dazwischen vorhandenen Schraubverbindung 28 erfolgt.

Die Schraube 17 ist mit einem Steckschlüssel zu lösen und mit der Rolle 18 zu entfernen.

Dann kann das Innengehäuse 11 nach hinten aus der Griffhülse 4a herausgezogen werden.

In einem weiteren Demontageschritt ist nach vorherigen oder jetzigen Losschrauben der Frontkappe das Druckstück 21 aus dem Innengehäuse 11 nach hinten herauszuziehen. Zur Demontage des Wälzlagers 14 sind noch ein Quadring 29 und eine Scheibe 31 abzunehmen. Anschließend ist die Mutter 16 mit einem Steckschlüssel zu lösen und abzuschrauben. In einem nächsten Demontageschritt ist die Antriebswelle 7 komplett aus dem Innengehäuse 11 nach hinten auszupressen, wozu eine entsprechende Vorrichtung hilfreich ist. Dabei wird eine vor dem Wälzlager 14 angeordnete Buchse 32 von der Antriebswelle 7 mit abgedrückt.

Dann kann die den Steck-Verbindungsabschnitt 23 tragende Anzugstange 10 nach hinten aus der Antriebswelle 7 herausgeschraubt werden.

Nach Entfernung eines Sicherungsringes 33 mit einer Seegerzange kann dann das hintere Wälzlager 13 mit einer Abziehvorrichtung von der Lagerhülse 7a abgezogen werden.

Mit einer Abziehvorrichtung kann auch das vordere Wälzlager 14 aus dem Innengehäuse 11 abgezogen werden.

Durch diese bekannte Ausgestaltung ist ein großer Herstellungsaufwand und insbesondere ein großer Montage- und Zeitaufwand zum Austausch der Lager 13, 14 vorgegeben.

Der Erfindung liegt die Aufgabe zugrunde, bei einem Handstück der eingangs angegebenen Art den Aufwand zum Ausbau der Antriebswelle. insbesondere zum Austausch seiner Lager zu verringern.

Diese Aufgabe wird durch die Merkmale des Anspruchs 1 gelöst.

Beim erfindungsgemäßen Handstück ist die Antriebswelle mit den Lagern als Baueinheit nach vorne ausbaubar. Hierdurch ergeben sich insbesondere bezüglich des Austausches der Antriebswellenlager wesentliche Vorteile, insbesondere ein einfacher, schonender und schneller Aus- und Einbau, wobei auch herstellungstechnische Vorteile erzielt werden. Den Austausch können auch Nichtfachleute z.B. der Zahntechniker, problemlos und qualitätsvoll durchführen, wobei vorzugsweise eine beim Benutzer bereitgestellte Reserve-Baueinheit dazu benutzt werden kann. Dies gilt nicht nur für die Baueinheit sondern auch für die Wälzlager.

Bei dem Ausbau nach vorne ist es bei der erfindungsgemäßen Ausgestaltung nicht erforderlich, das Handstückteil vom Motorteil zu trennen, was bereits eine wesentliche Vereinfachung bedeutet. Der Ausbau der Antriebswelle nach vorne ist insbesondere deshalb sehr vorteilhaft, weil nicht nur das vordere Lager, sondern auch das hintere Lager mit der Antriebswelle aus dem Innengehäuse herausgezogen wird. Es ist nämlich wesentlich einfacher, das hintere Lager von der Welle in deren ausgebauten Zustand abzuziehen, als das hintere Lager aus dem Innengehäuse separat herauszuziehen, was zwar möglich ist, jedoch wegen der hinteren Position nur erschwert durchführbar ist, ggf. nach einer Trennung des Handstückteils vom Motorteil nach hinten durchgeführt werden muß.

In den Unteransprüchen sind Merkmale enthalten, die zu weiteren Vereinfachungen hinsichtlich Herstellung und Montage führen und zwar sowohl im Hinblick auf den jeweils erforderlichen Arbeits- als auch Zeitaufwand. Ein weiterer Vorteil der Erfindung besteht darin, daß die Lager schonender montiert werden können und deshalb die Gefahr von Beeinträchtigungen oder Beschädigungen während der Montage verringert ist. Weitere Merkmale der Erfindung beziehen sich auch auf eine Verbesserung der Abdichtung des vorderen Lagers, das einer Verschmutzung besonders stark ausgesetzt ist.

Nachfolgend werden die Erfindung und weitere durch sie erzielbare Vorteile anhand bevorzugter Ausführungsbeispiele und einer Zeichnung näher erläutert. Es zeigt
- Fig. 1: ein erfindungsgemäßes Handstück in der Seitenansicht;
- Fig. 2: die vordere Hälfte des Handstucks im axialen Schnitt;
- Fig. 3: ein Innengehäuse des Handstücks in der Draufsicht;
- Fig. 4: eine in Fig. 2 mit X gekennzeichnete Lager-Dichtung im Längsschnitt in vergrößerter Darstellung;
- Fig. 5: Handstück gemäß Stand der Technik.

Das stabförmige, gerade Handstück 101 besteht aus einem hinteren Motorteil 102 mit einem darin eingebauten, insbesondere elektrischen Antriebsmotor 103 und einem vorderen Handstückteil 104, in das von vorne ein Bearbeitungswerkzeug mit seinem Schaft 105 einspannbar ist. Hierzu dient eine koaxial im Handstückteil 104 angeordnete, hülsenförmige, geschlitzte Spannzange 106, die Teil einer Antriebswelle 107 ist, die koaxial im Handstückteil 104 drehbar gelagert ist und mit dem Antriebsmotor 103 zu ihrer Rotation verbunden ist. Die Spannzange 106 läßt sich durch eine Relativverdrehung zwischen dem Motorteil 102 und einer Grifthülse 104a des Handstückteils 104 öftnen und schließen. Hierzu ist in das Handstückteil 104 ein Betätigungsmechanismus 108 integriert, der zwischen der Griffhülse 104a und der Antriebswelle 107 wirksam ist und ein Getriebe 109 aufweist, das die Drehbewegung der Griffhülse 104a in eine Axialbewegung einer runden Anzugstange 110 umwandelt, die sich von hinten koaxial durch eine Lagerhülse 107a der Antriebswelle 107 erstreckt, darin axial beweglich in einer Bohrung gelagert ist und mit ihrem vorderen Ende in ein Innengewinde 106a der Spannzange 106 eingeschraubt ist. Die Griffhülse 104a ist auf einem hülsenförmigen Innengehäuse 111 um die Längsmittelachse 112 des Handstücks 101 drehbar und längs verschiebbar gelagert. Im Innengehäuse 111 ist die Antriebswelle 107 mittels zwei einen axialen Abstand voneinander aufweisenden Wälzlagern 113, 114 drehbar gelagert. Das Motorteil 102 ist durch ein Kabel 102a und evtl. ein Anschlußteil 102b an eine Energie-Versorgungsquelle, hier eine Stromquelle, und/oder ein Steuergerät anschließbar.

Das Getriebe 109 weist eine radiale Schraube 117 auf, die ein radiales Loch in der Griffhülse 104a und mit einer Rolle 118 eine im Innengehäuse 111 in Umfangsrichtung schräg verlaufende Nut 119 durchfaßt und in ein Druckstück 121 eingeschraubt ist, das im hinteren Endbereich des hohlzylindrischen Innengehäuses 111 axial verschiebbar mit Bewegungsspiel sitzt und in einem mittleren Innenring 122 ein zentrales Loch 123 aufweist, durch das hindurch die Antriebswelle 107 mit einem Steck-Verbindungsabschnitt 124 ragt, der durch eine Steckkupplung 125 mit einem Antriebszapfen 126 des Antriebsmotors 103 verbunden ist. Fig. 3 zeigt das Innengehäuse 111 mit der Nut 119 in der Draufsicht.

Das Motorteil 102 weist ebenfalls ein Innengehäuse 127 auf, in dem der Antriebsmotor 103 angeordnet ist und mit dem es auf das hintere Ende des Innengehäuses 111 des Handstückteils 104 bei 128 aufgeschraubt ist.

Die Griffhülse 104a besteht aus einer Trägerhülse 104b aus Metall und einer auf deren Außenmantelfläche befestigten Umhüllung 104c aus griffigem und/oder weichelastischem und/oder wärmeisolierendem Material, z.B. Gummi oder Kunststoff, die aufgezogen, angeformt oder aufgespritzt sein kann. Am vorderen Ende schließt die Umhüllung 104c mit der Trägerhülse 104b an einer radialen Stirnfläche 104d ab. Das hintere Ende der Umhüllung 104c überragt die Trägerhülse 104b, wobei diese Verlängerung vorzugsweise auf dem vorderen Endbereich des hohlzylindrischen Gehäuses 127 des Motorteils 102 drehbar gelagert ist. Vorzugsweise ist auch das Gehäuse 127 mit einer der Umhüllung 104c entsprechenden Umhüllung 127a versehen.

Der Steck-Verbindungsabschnitt 124 ist vorzugsweise eine auf das hintere Ende der Anzugstange 110 aufgesteckte und z.B. durch einen Querstift befestigte Hülse 124a mit einem Flansch 124b an ihrem vorderen Ende, der an einer nach hinten weisenden Schulter der Anzugstange 110 anliegt und mit dem der einen nach hinten gerichteten Abstand davon aufweisende Innenring 122 zusammenwirkt.

Zwischen der Anzugstange 110 und der Lagerhülse 107a besteht eine Drehmitnahmeverbindung 135, die durch einen Querstift in der Anzugstange 110 gebildet ist, dessen Enden in einen rückseitigen offenen axialen Schlitz S im hinteren Endbereich der Lagerhülse 107a eingreifen.

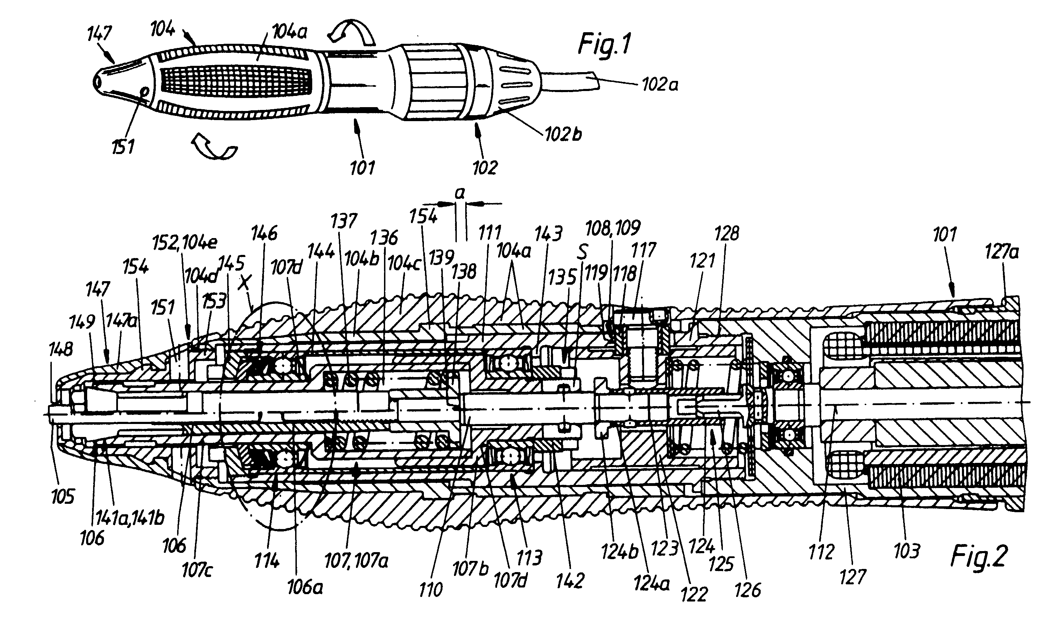

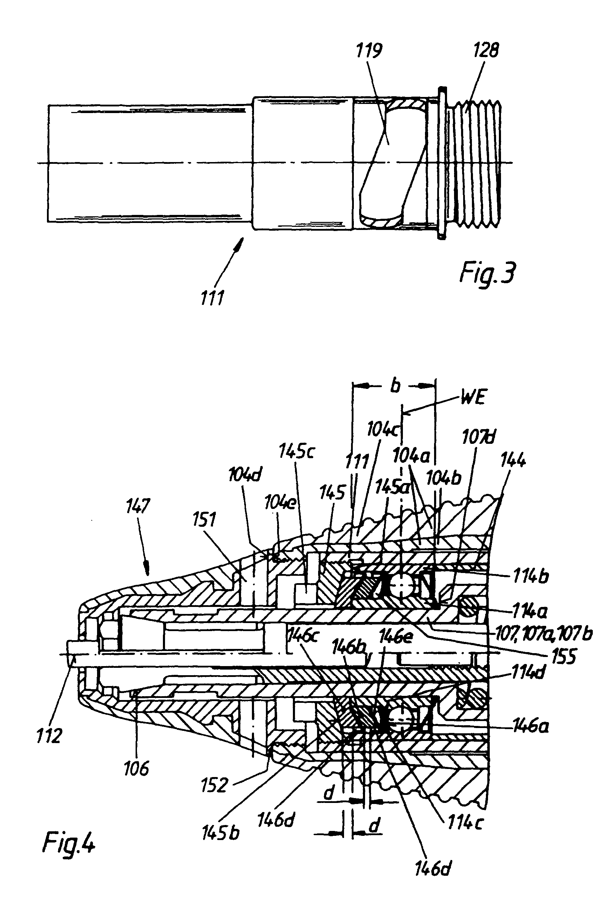

Die Lagerhülse 107a besteht aus einem hinteren Lagerhülsenteil 107b und einem vorderen Lagerhülsenteil 107c, die an ihren einander zugewandten Endbereichen topfförmig ausgebildet sind, wobei sie sich in diesen Bereichen überlappen und fest miteinander verbunden sind, z.B. fest zusammengepreßt sind. Hierdurch ist ein den hinteren Endbereich der Spannzange 106 und den vorderen Endbereich der Anzugstange 110 umgebender Ringfreiraum 136 geschaffen, in dem eine Spannfeder 137 in Form einer gewendelten Druckfeder angeordnet ist, deren vorderes Ende an einer Innenschulter des vorderen Lagerhülsenteils 107c abgestützt ist und deren hinteres Ende nach hinten gegen eine Flanschhülse 138 drückt die fest auf der Anzugstange 110 sitzt und beim vorliegenden Ausführungsbeispiel zwischen dem hinteren Ende der hülsenförmigen Spannzange 106 und einer Schulter 139 der Anzugstange 110 verschraubt ist. An ihrem vorderen Ende weist die Lagerhülse 107a eine Innenkonusfläche 141a auf, die nach vorne divergiert, und gegen die eine Außenkonusfläche 141b der an sich bekannten Spannzange 106 durch die Spannfeder 137 gespannt ist. In der Spannstellung gemäß Fig. 2 besteht zwischen der Flanschhülse 138 und dem hinteren Lagerhülsenteil 107b ein Abstand a, wodurch das Spannen aufgrund der Kraft der Spannfeder 137 gewährleistet ist.

Eines der beiden Lager 113, 114 ist als Festlager und das andere als Loslager ausgebildet. Bei der vorliegenden Ausgestaltung ist das hintere Wälzlager 113 ein Festlager. Sein Innenring ist auf einem rückseitigen Lagerzapfen des hinteren Lagerhülsenteils 107b angeordnet und er ist zwischen einer nach hinten weisenden Schulter 107d und einem auf den Lagerzapfen aufgeschraubten Schraubring 142 eingespannt. Der Außenring des Wälzlagers 113 liegt mit seiner hinteren Stirnfläche an einer Innenschulter 143 des Innengehäuses 111 an, wobei zwischen den Außenringen beider Wälzlager 113, 114 eine Distanzhülse 144 angeordnet ist, die mit Bewegungsspiel in dem Innengehäuse 111 sitzt. Die Länge der Distanzhülse 144 ist so groß bemessen, daß der Innering des vorderen Wälzlagers 114 einen geringen Abstand von einer nach vorne gerichteten Schulterfläche 107d des vorderen Lagerhülsenteils 107b aufweist, wobei vorzugsweise dazwischen eine Ringfeder angeordnet sein kann. Dabei ist der Außenring des vorderen Wälzlagers 114 durch einen in das vordere Ende des Innengehäuses 111 eingeschraubten Schraubring 145 mittels der Distanzhülse 144 und des Außenrings des Wälzlagers 113 gegen die Innenschulter 143 geschraubt. Zwischen dem Schraubring 145 und dem vorderen Wälzlager 114 ist eine Ringdichtung 146 zur Abdichtung des Wälzlagers 114 vorgesehen, die vorzugsweise wenigstens teilweise eine Baueinheit mit dem Wälzlager 114 bildet. Einzelheiten dieser Ringdichtung 146 werden weiter unten noch beschrieben.

Die bei der vorliegenden Ausgestaltung ein Außengehäuse bildende Griffhülse 104a ist frontseitig durch eine Frontkappe 147 mit einem mittigen Durchgangsloch 148 für das Werkzeug bzw. dessen Schaft 105 abgedeckt. Vorzugsweise überragen die Antriebswelle 107 bzw. das vordere Lagerhülsenteil 107c das Innengehäuse 111 und die Griffhülse 104a nach vorne, und die Frontkappe 147 weist eine domförmige Querschnittsform auf, wodurch sich eine kegel- bzw. kegelstumpfförmige Form für das Handstück an seinem vorderen Ende ergibt. Zwischen der Frontkappe 147 und dem vorderen Endbereich der Spannzange 106 sowie der Antriebswelle 107 ist ein zwangsläufig erforderlicher Spalt 149 vorhanden, der sich bis zum Schraubring 145 bzw. zur Ringdichtung 146 hin erstreckt. Um die Reinigungswirkung dieses Spaltes durch Ausblasen von vorne zu verbessern und gleichzeitig die Gefahr zu verringern, daß der Staub in die Ringdichtung 146 eindringt, sind wenigstens ein oder mehrere, bei der vorliegenden Ausgestaltung zwei einander gegenüberliegende radial vom Spalt 149 ausgehende Durchgangslöcher 151 in der Frontkappe 147 vorgesehen, durch die die Druckluft und der Staub beim Ausblasen entweichen können.

Die Frontkappe 147 ist mit der Trägerhülse 104b verschraubt. Vorzugsweise ist hierzu am hinteren Ende der Frontkappe 147 ein sich von einer radialen Ringschulter 152 nach hinten erstreckender Ansatz 153 vorzugsweise ringförmiger Form und mit Außengewinde vorgesehen, mit dem die Frontkappe 147 in ein entsprechendes Innengewinde 104d am vorderen Ende der Trägerhülse 104b eingeschraubt ist, wobei die Ringschulter 152 gegen die vordere Stirnfläche 104e der Trägerhülse 104b geschraubt ist, wodurch ein Schraubanschlag gebildet ist. Vorzugsweise ist auch die Frontkappe 147 mit einer der Umhüllung 104c entsprechenden Umhüllung 147a versehen. Wie bereits bei der Umhüllung 104c sind auch zwischen der Frontkappe 147 und der Umhüllung 147a durch Vorsprünge und/oder Vertiefungen gebildete Formschlußverbindungen 154 zur Sicherung der jeweiligen Umhüllung auf dem sie tragenden Körper vorgesehen.

Die Ringdichtung 146 besteht aus wenigstens zwei, vorzugsweise drei Dichtscheiben 146a, 146b, 146c, die vorzugsweise im Sinne eines Dichtspakets zusammengesetzt sind bzw. längs der Mittelachse 112 aneinanderliegen und insbesondere in das vordere Wälzlager 114 außen bzw. vorderseitig integriert sind. Die Breite b des Wälzlagers 114 ist größer bemessen als die übliche Normbreite dieses Typs, wobei der Außen-und Innenring gleichermaßen nach vorne hin verlängert ist, so daß die Wälzkörper, hier Kugeln, bzw. die Wälzlagerebene WE exzentrisch, d.h. nach hinten versetzt, außermittig angeordnet sind. Hierdurch ist zwischen dem Aüßenring und Innenring vorderseitig von den Wälzkörpern ein freier Ringraum 155 geschaffen, in dem wenigstens die beiden ersten Dichtscheiben 146a, 146b oder auch die dritte Dichtscheibe 146c angeordnet sind. Bei der vorliegenden Ausgestaltung sitzen die beiden ersten Dichtscheiben 146a, 146b im Ringraum 155, und die dritte, d.h. die vorderste Dichtscheibe 146c mit ihrem Außenumfangsbereich ganz oder teilweise im Ringraum 155 und mit ihrem Innenumfangsbereich außerhalb des Ringraums 155, wobei sie den den Innenring des Wälztagers 114 tragenden hülsenförmigen Abschnitt des Lagerhülsenteils 107c umgreift und vorzugsweise an der vorderen Stirnfläche des Innenrings 114a anliegt.

Bei der vorliegenden Ausgestaltung sind die Dichtscheiben 146a, 146b, 146c am Außenring 114b gehalten, insbesondere bei gegenseitiger axialer Abstützung gegen eine Schulter 114c des Außenrings gedrückt, vorzugsweise durch den Schraubring 145, der seitfich von vorne gegen die jeweils vorderste Dichtscheibe, hier 146c, drückt.

Die erste bzw. hinterste Dichtscheibe 146a ist eine dünne, vorzugsweise flache Scheibe aus elastisch biegbaren Material, insbesondere Kunststoff, vorzugsweise Teflon. Die Dicke der Scheibe beträgt wenige Zehntelmillimeter, vorzugsweise etwa 0,15 mm. Sie liegt mit ihrem äußeren Randbereich an der Innenschulter 114c an, wobei sie so groß bemessen ist, daß sie mit geringem Bewegungsspiel in den Außenring 114b einschiebbar ist. Radial gegenüberliegend ist am Innering 114a eine Schulter 114d angeordnet, an der die erste Dichtscheibe 146a mit ihrem inneren Randbereich anliegt. Die Schulter 114d ist bezüglich der Schulter 114c geringfügig axial nach vorne versetzt, und zwar um vorzugsweise etwa 0,05 mm. Aufgrund dieses Versatzes wird die bei der vorliegenden Ausgestaltung ebene erste Dichtscheibe 146a in der Montagestellung innen axial ausgebogen, wobei sie mit einer leichten axialen, nach hinten gerichteten elastischen Spannung an der Schulter 114d anliegt. Hierdurch ist eine hervorragende Abdichtung der Wälzkörper geschaffen, die auch beim Vorhandensein kaum zu vermeidender Herstellungstoleranzen eine sichere Abdichtung gewährleistet, weil die erste Dichtscheibe 146a aufgrund ihrer ausgebogenen und elastisch vorgespannten Stellung und den dadurch vorgegebenen Federweg immer an der Dichtfläche, nämlich an der Schulter 114d gleitend anliegt. Der Innendurchmesser der ersten Dichtscheibe 146a kann so groß bemessen sein, daß ihre Innenfläche einen geringen radialen Abstand von der zylindrischen Fläche des Innenrings 114a aufweist oder die Innenfläche der ersten Dichtscheibe 146a kann auch eine Dichtfunktion mit der zylindrischen Fläche des Innenrings 114a ausüben, wenn nur ein geringes Bewegungsspiel dazwischen vorhanden ist.

Besonders gute Dichtergebnisse werden erzielt, wenn die erste Dichtscheibe 146a aus einem faseroder gewebeverstärkten Kunststoff, insbesondere Teflon, besteht.

Die zweite und vorzugsweise auch die dritte Dichtscheibe 146b, 146c ist jeweils vorzugsweise ein Filzring oder eine Filzscheibe, von denen beide oder nur die zweite auf dem Innenring 114a dichtend gleiten, wobei die dritte Dichtscheibe 146c auf der vorderen Lagerhülse 107c gleiten kann, wie es bereits beschrieben worden ist. Vorzugsweise ist der zweiten und der dritten Dichtscheibe 146b, 146c jeweils ein Stabilisatorring 146d zugeordnet, an dem die zugehörige Dichtscheibe axial anliegen oder auch befestigt sein kann, z.B. durch Kleben. Die einander gleichen Stabilisatorringe 146d bestehen jeweils aus einem hohlzylindrischen Haltering, von dem sich insbesondere an dessen hinterem Ende ein Innenflansch 146e radial einwärts erstreckt, der vorzugsweise hohlkegelförmig geformt ist, wobei seine Kegelfläche insbesondere nach vorne konvergiert. An dieser tellerfederförmigen Form liegt die zugehörige Dichtscheibe an, vorzugsweise an der Vorderseite des Innenflansches 146e. Die axiale Breite der Halteringe bzw. die axiale Dicke der zweiten bzw. dritten Dichtscheibe 146b, 146c ist jeweils so groß bemessen, daß in der Montagestellung zwischen den Halteringen bzw. zwischen dem vordersten Haltering und dem Schraubring 145 jeweils ein Abstand d besteht. Hierdurch kann durch den Schraubring 145 ein axialer Druck auf den zweiten bzw. dritten Dichtring 146b, 146c ausgeübt werden. Vorzugsweise ist die Anordnung so getroffen, daß ein vorbestimmter axialer Druck dann erreicht wird, wenn der Schraubring 145 an einem Schraubanschlag 145a anliegt, der bei der vorliegenden Ausgestaltung durch das vordere Ende des Außenring 114b gebildet ist.

Bei der vorliegenden Ausgestaltung ist zwischen dem Außenumfang der Dichtscheiben 146b, 146c und dem Außenring 114b ein kleiner radialer Abstand vorgesehen, in den der Haltering des zugehörigen Stabilisatorrings 146d hineinragt.

Die Innenabmessung des Schraubringes 145 ist vorzugsweise nur geringfügig größer bemessen als die ihn durchragende Lagerhülse 107c, so daß der Schraubring 145 mit seiner nach hinten gerichteten Druckfläche 145b die an ihr anliegende Dichtscheibe 146c möglichst großflächig und insbesondere auch an ihrem Innenrand zu stützen vermag. Vorzugsweise ist die Druckfläche 145b eine Hohlkegelfläche, die nach vorne konvergiert.

Bei den Stabilisatorringen 146d kann es sich um an sich bekannte Abdeckringe aus Metall oder Kunststoff handeln. Ein solcher Abdeckring ist auch an der Hinterseite des Wälzlagers 114 angeordnet.

Ein Ausbau der Antriebswelle 107 und der Wälzlager 113, 114 und der Ringdichtung 146 bzw. ein Austausch derselben erfolgt durch folgende Demontageschritte. Nach dem Abschrauben der Schraube 117 und der Frontkappe 147 braucht nur noch der Schraubring 145 mit einem in vorderseitigen Eingriffsöffnungen 145c eingreifenden Werkzeug abgeschraubt zu werden. Sofern die dritte Dichtscheibe 146c lose an den Stabilisatorring 146d angesetzt ist, kann sie entternt werden. Dann kann die komplette Antriebswelle 107 mit den Wälzlagern 113, 114 und die dazwischen angeordnete Distanzhülse 144 nach vorne aus dem Innengehäuse 111 herausgezogen werden, was von Hand erfolgen kann, da die Innenringe der Wälzlager 113, 114 mit einer verhältnismäßig leichtgängigen Passung im Innengehäuse 111 sitzen. Das hintere Wälzlager 113 wird zwangsläufig mit der Antriebswelle 107 ausgebaut, weil es an letzterer festgelegt ist. Im ausgebauten Zustand kann von der Antriebswelle 107 handhabungsfreundlich der Schraubring 142 abgeschraubt werden. Dann kann das Wälzlager 113 und ggf. auch erst jetzt das Wälzlager 114 mit der Ringdichtung 146 handhabungsfreundlich von der Antriebswelle 107 abgezogen werden, vorzugsweise mittels zugehörigen Abziehvorrichtungen.

Diese Ausgestaltung ermöglicht es, die Wälzlager 113, 114 und/oder die Ringdichtung 146 durch den Benutzer in einfacher und schneller Weise auszutauschen. Es ist vorteilhaft, wenn der Benutzer sich jeweils einen Satz Wälzlager und ggf. auch eine Ringdichtung 146 als Vorrat lagert, so daß das Handstück betriebsseitig in kurzer Zeit wieder montiert und benutzt werden kann. Ein Einschicken des Wälzlagers an den Hersteller, wie es bei der bekannten Ausgestaltung der Fall ist, ist nicht erforderlich.

Die Montage erfolgt in umgekehrten Montageschritten. Zunächst werden die Wälzlager 113, 114 auf die Antriebswelle 107 aufgeschoben und das hintere Wälzlager 113 durch den Schraubring 142 gesichert. In dem Fall, in dem die Ringdichtung 146 wenigstens teilweise eine Baueinheit mit dem vorderen Wälzlager 114 bildet, ist gleichzeitig die Ringdichtung 146 montiert. Dann wird die so vormontierte Antriebswelleneinheit von vorne In das Innengehäuse 111 eingeschoben und durch Einschrauben des Schraubrings 145 positioniert und gesichert, wobei vorher die dritte Dichtscheibe 146c als separates Einzelteil zusätzlich montiert werden kann. Danach bedarf es lediglich noch eines Einschraubens der Frontkappe 147 und der Schraube 117.

Bei den Demontage- bzw. Montagevorgängen gestattet die Steckkupplung 124 in einfacher Weise sowohl den Aus- als auch Einbau.

## Patentansprüche

1. Gerades Motorhandstück (101) für medizinische Zwecke, vorzugsweise für ein medizinisches oder dentales Labor,
mit einer in einem hülsenförmigen Gehäuse (111) angeordneten Spannvorrichtung (106) zum wahlweisen Einspannen von vorne in das Handstück (101) einsteckbaren Werkzeugen (105),
wobei die Spannvorrichtung (106) an einer Antriebswelle (107) angeordnet ist, die mittels einem hinteren und einem vorderen Wälzlager (113, 114) drehbar im Gehäuse (101) gelagert ist,
wobei zur axialen Halterung der Antriebswelle (107) eine erste Schulter (143) am Gehäuse (111) oder Anbauteilen derselben vorgesehen ist, an der der Außenring eines der Wälzlager (113) anliegt, und der ersten Schulter (143) in einem axialen Abstand gegenüberliegend eine lösbare Arretierschulter (145) angeordnet ist,
**dadurch gekennzeichnet,**
**daß** die erste Schulter (143) außenseitig an der Rückseite des Außenrings des hinteren Wälzlagers (113) angeordnet ist
und die Arretierschulter (145) außenseitig an der Vorderseite des vorderen Wälzlagers (114) angeordnet ist,
und **daß** die Antriebswelle (107) mit den Wälzlagern (113, 114) als Baueinheit von der Vorderseite des Gehäuses (111) aus- und einbaubar ist.

2. Gerades Motorhandstück nach einem der vorherigen Ansprüche,
**dadurch gekennzeichnet,**
**daß** das eine Wälzlager, vorzugsweise das hintere Wälzlager (113) als sogenanntes Festlager und das andere Wälzlager, vorzugsweise das vordere Wälzlager (114), als sogenanntes Loslager ausgebildet ist.

3. Gerades Motorhandstück nach einem der vorherigen Ansprüche,
**dadurch gekennzeichnet,**
**daß** zwischen den Außenringen der Wälzlager (113, 114) eine Distanzhülse (144) angeordnet ist.

4. Gerades Motorhandstuck nach einem der vorherigen Ansprüche,
**dadurch gekennzeichnet,**
**daß** der Außenring des vorderen Wälzlagers (114) durch ein in das Gehäuse (111) eingeschraubtes Schraubteil (145) nach hinten gegen eine Innenschulter des Gehäuses (111), insbesondere mittels der Distanzhülse (144) und dem Außenring des hinteren Wälzlagers (113) gegen die Innenschulter (143) geschraubt ist.

5. Gerades Motorhandstück nach einem der vorherigen Ansprüche,
**dadurch gekennzeichnet,**
**daß** zwischen dem Schraubteil (145) und dem vorderen Wälzlager (114) eine Ringdichtung (146) angeordnet ist.

6. Gerades Motorhandstuck nach einem der vorherigen Ansprüche,
**dadurch gekennzeichnet,**
**daß** das vordere Wälzlager (114) vorderseitig von seinen Wälzkörpern eine Ringdichtung (146) aufweist, die zwischen Innen- und Außenring (114a, 114b) angeordnet und wirksam ist, wobei vorzugsweise das Wälzlager (114) bezüglich seiner Wälzkörper nach vorne breiter ist als ein Normtyp des Wälzlagers.

7. Gerades Motorhandstück nach Anspruch 5 oder 6,
**dadurch gekennzeichnet,**
**daß** das vordere Wälzlager (114) und wenigstens ein Teil der Ringdichtung (146) ein vorgefertigtes Bauteil ist und/oder eine Baueinheit bilden.

8. Gerades Motorhandstück nach einem der vorherigen Ansprüche,
**dadurch gekennzeichnet,**
**daß** das Betätigungsteil eine das Gehäuse (111) umgebende Griffhülse (104a) ist, die das Gehäuse (111) nach vorne überragt, und daß das Handstück an seinem vorderen Ende eine vorzugsweise domförmige Frontkappe (147) aufweist, die mit der Griffhülse (104a) in deren überragenden Bereich verschraubt ist.

9. Gerades Motorhandstück nach Anspruch 8,
**dadurch gekennzeichnet,**
**daß** die Griffhülse (104a) auf ihrer Außenmantelfläche mit einem weichelastischen und/oder wärmeisolierenden Werkstoff beschichtet ist.

10. Gerades Motorhandstück nach einem der vorherigen Ansprüche,
**dadurch gekennzeichnet,**
**daß** die Antriebswelle (107) eine runde Hülse (107a) ist, die in ihrem vorderen Endbereich einen nach vorne divergierenden Innenkonus aufweist, und in der koaxial eine geschlitzte Spannhülse (106) längs verschiebbar gelagert ist, die in ihrem vorderen Endbereich einen mit dem Innenkonus zusammenwirkenden Außenkonus aufweist.

11. Gerades Motorhandstück nach Anspruch 10,
**dadurch gekennzeichnet,**
**daß** die Spannhülse (106) mit einer die Hülse (107a) nach hinten durchsetzenden Zugstange (110) verbunden ist, die in ihrem hinteren Endbereich durch einen Querzapfen (117) mit dem Betätigungsteil (104a) verbunden ist, wobei das Betätigungsteil (104a) in Umfangsrichtung drehbar gelagert ist und der Querzapten (117) eine im Gehäuse (111) in Umfangsrichtung schräg verlaufende Nut (119) durchfaßt.

12. Gerades Motorhandstück nach einem der vorherigen Ansprüche,
**dadurch gekennzeichnet,**
**daß** das hintere Wälzlager (113) an einer nach hinten weisenden Schulter der Antriebswelle (107) anliegt und an seiner Rückseite durch ein Sicherungsteil, insbesondere einen Ring begrenzt ist.

## Claims

1. Straight motor-driven hand piece (101) for medical purposes, preferably for a medical or dental laboratory, with a chucking device (106) arranged in a sleeve-shaped casing (111) for alternative chucking of tools (105) insertable into the handpiece (101) from the front, the chucking device (106) being arranged on a drive shaft (107), which is supported rotatably in the casing (111) by means of a rear and front rolling bearing (113, 114), a first shoulder (143) being provided on the casing (111) or attached parts of the same for axially holding of the drive shaft (107), adjacent to which shoulder is the outer ring of one of the rolling bearings (113), and a detachable retaining shoulder (145) being arranged at an axial distance opposing the first shoulder (143) **characterized in that** the first shoulder (143) is arranged on the outside of the outer ring of the rear rolling bearing (113) and the retaining shoulder (145) is arranged on the outside of the front rolling bearing (114), and that the drive shaft (107) with the rolling bearings (113, 114) can be removed and inserted as a modular unit from the front of the casing (111).

2. Straight motor-driven hand piece according to one of the preceding claims, **characterized in that** one rolling bearing, preferably the rear rolling bearing (113), is formed as a so-called fixed bearing and the other rolling bearing, preferably the front rolling bearing (114), is formed as a so-called movable bearing.

3. Straight motor-driven hand piece according to one of the preceding claims, **characterized in that** a distance sleeve (144) is arranged between the outer rings of the rolling bearings (113, 114).

4. Straight motor-driven hand piece according to one of the preceding claims, **characterized in that** the outer ring of the front rolling bearing (114) is screwed by means of a screwed part (145) into the casing (111) to the rear against an inner shoulder of the casing (111), in particular against the inner shoulder (145) by means of the distance sleeve (144) and the outer ring of the rear rolling bearing (113).

5. Straight motor motor-driven hand piece according to one of the preceding claims, **characterized in that** an annular seal (146) is arranged between the screwed part (145) and the front rolling bearing (114).

6. Straight motor motor-driven hand piece according to one of the preceding claims, **characterized in that** the front rolling bearing (114) has an annular seal (146) on the front side of its rolling elements, which seal is arranged and effective between the inner and outer ring (114a, 114b), the rolling bearing (114) being preferably wider towards the front with reference to its rolling elements than a standard type of rolling bearing.

7. Straight motor-driven hand piece according to claim 5 or 6, **characterized in that** the front rolling bearing (114) and at least a part of the annular seal (146) is a prefabricated component and/or form a modular unit.

8. Straight motor motor-driven hand piece according to one of the preceding claims, **characterized in that** the actuating member is a gripping sleeve (104a) surrounding the casing (111) which protrudes beyond the casing (111) at the front, and that the hand piece has a preferably dome-shaped front cap (147) at its front end, which cap is screwed to the gripping sleeve (104a) in its protruding area.

9. Straight motor-driven hand piece according to claim 8, **characterized in that** the gripping sleeve (104a) is coated on its outer sheath surface with a flexible and/or thermally insulating material.

10. Straight motor-driven hand piece according to one of the preceding claims, **characterized in that** the drive shaft (107) is a round sleeve (107a), which has an inner cone diverging to the front in its frond end area, and in which a slit chucking sleeve (106) is supported coaxially and so as to be displaceable longitudinally, which chucking sleeve has an outer cone interacting with the inner cone in its front end area.

11. Straight motor-driven hand piece according to claim 10, **characterized in that** the chucking sleeve (106) is connected to a connecting rod (110) passing through the sleeve (107a) to the rear, which rod is connected in its rear end area to the actuating member (104a) by a transverse pin (117), the actuating member (104a) being supported rotatably in a circumferential direction and the transverse pin (117) engaging a groove (119) in the casing (111) running at an angle in a circumferential direction.

12. Straight motor-driven hand piece according to one of the preceding claims, **characterized in that** the rear rolling bearing (113) abuts a shoulder of the drive shaft (107) pointing backwards and is limited at its rear by a securing part, in particular a securing ring.

## Revendications

1. Pièce à main motorisée (101) droite utilisée à des fins médicales, de préférence pour un laboratoire médical ou dentaire,
comprenant un dispositif de serrage (106) disposé dans un corps (111) en forme de douille pour la fixation sélective d'outils (105) susceptibles d'être enfichés de l'avant dans la pièce à main (101),
le dispositif de serrage (106) étant disposé sur un arbre d'entraînement (107) qui est monté en rotation dans le corps (111) à l'aide d'un roulement arrière (113) et d'un roulement avant (114),
un premier épaulement (143) étant prévu sur le corps (111) ou sur des parties rapportées sur ce dernier, en vue du positionnement axial de l'arbre d'entraînement (107), épaulement contre lequel porte la bague extérieure d'un des roulements (113), et un épaulement d'arrêt (145) amovible étant disposé à distance axiale en face du premier épaulement (143),
**caractérisée par le fait**
**que** le premier épaulement (143) est disposé côté extérieur sur le côté arrière de la bague extérieure du roulement arrière (113)
et l'épaulement d'arrêt (145) est disposé côté extérieur sur le côté avant du roulement avant (114),
et **que** l'arbre d'entraînement (107) peut être monté et démonté, en tant que module avec les roulements (113, 114), sur le côté avant du corps (111).

2. Pièce à main motorisée droite suivant l'une des revendications précédentes,
**caractérisée par le fait**
**que** l'un des roulements, de préférence le roulement arrière (113), est réalisé sous forme de roulement fixe et l'autre roulement, de préférence le roulement avant (114), est réalisé sous forme de roulement mobile.

3. Pièce à main motorisée droite suivant l'une des revendications précédentes,
**caractérisée par le fait**
**qu'**une douille d'espacement (144) est disposée entre les bagues extérieures des roulements (113, 114).

4. Pièce à main motorisée droite suivant l'une des revendications précédentes,
**caractérisée par le fait**
**que** la bague extérieure du roulement avant (114) est serrée par une partie à vis (145) vissée dans le corps (111), vers l'arrière contre un épaulement intérieur du corps (111), en particulier à l'aide de la douille d'espacement (114) et de la bague extérieure du roulement arrière (113) contre l'épaulement intérieur (143).

5. Pièce à main motorisée droite suivant l'une des revendications précédentes,
**caractérisée par le fait**
**qu'**un joint annulaire (146) est disposé entre la partie à vis (145) et le roulement avant (114).

6. Pièce à main motorisée droite suivant l'une des revendications précédentes,
**caractérisée par le fait**
**que** le roulement avant (114) présente, sur le côté avant de ses éléments roulants, un joint annulaire (146) qui est disposé et agit entre les bagues intérieure et extérieure (114a, 114b), le roulement (114) étant, par rapport à ses éléments roulants, plus large vers l'avant qu'un roulement de type normalisé.

7. Pièce à main motorisée droite suivant la revendication 5 ou 6,
**caractérisée par le fait**
**que** le roulement avant (114) et au moins une partie du joint annulaire (146) forment un module préfabriqué et/ou un ensemble.

8. Pièce à main motorisée droite suivant l'une des revendications précédentes,
**caractérisée par le fait**
**que** la partie d'actionnement est un manchon de poignée (104a) entourant le corps (111) et dépassant le corps (111) vers l'avant, et que la pièce à main présente à son extrémité avant un capot frontal (147) de préférence en forme de dôme, qui est relié par vis au manchon de poignée (104a) dans la partie dépassante de ce dernier.

9. Pièce à main motorisée droite suivant la revendication 8,
**caractérisée par le fait**
**que** le manchon de poignée (104a) est revêtu sur sa surface d'enveloppe extérieure d'un matériau élastique mou et/ou thermo-isolant.

10. Pièce à main motorisée droite suivant l'une des revendications précédentes,
**caractérisée par le fait**
**que** l'arbre d'entraînement (107) est une douille ronde (107a) qui présente dans sa zone d'extrémité avant un cône intérieur divergeant vers l'avant et dans laquelle une douille de serrage (106) fendue est montée coaxialement en étant mobile en translation longitudinale, cette douille présentant dans sa zone d'extrémité avant un cône extérieur coopérant avec le cône intérieur.

11. Pièce à main motorisée droite suivant la revendication 10,
**caractérisée par le fait**
**que** la douille de serrage (106) est reliée à un tirant (110) qui traverse la douille (107a) vers l'arrière et qui est relié dans sa zone d'extrémité arrière par un axe transversal (117) à la partie d'actionnement (104a), la partie d'actionnement (104a) étant montée mobile en rotation dans la direction périphérique et l'axe transversal (117) traversant une rainure (119) s'étendant de façon oblique dans la direction circonférentielle dans le corps (111).

12. Pièce à main motorisée droite suivant l'une des revendications précédentes,
**caractérisée par le fait**
**que** le roulement arrière (113) est appliqué contre un épaulement tourné vers l'arrière sur l'arbre d'entraînement (107) et est délimité sur son côté arrière par une partie de blocage, en particulier un anneau.
